# DEMANDE DE BREVET EUROPEEN

(11) **EP 1 610 477 A1**
(43) Date de publication de la demande: **28.12.2005**
(21) Numéro de dépôt: 05291227.6
(22) Date de dépôt: 08.06.2005
(51) Int. Cl.: H04B 10/12, H04B 10/155

(54) **Émetteur optique micro-onde avec laser auto pulsant**

(30) Priorité: 23.06.2004 FR 0451315
(71) Demandeur: ALCATEL, 75008 Paris (FR)
(72) Inventeur: Duan, Guang-Hua, 92290 Chatenay Malabry (FR)
(74) Mandataire: Fournier, Michel Robert Marie

(57) **Abrégé**

L'émetteur optique comprend un laser auto-pulsant (2) produisant un signal auto-pulsé à une fréquence d'auto-pulsation (f_{SP}) donnée et un circuit de modulation (3) apte à générer un signal codé en modulation de fréquence (FSK) autour d'une fréquence correspondant à une sous-harmonique (f_{SP}/n) de la fréquence d'auto-pulsation du laser. Le circuit de modulation est prévu pour permettre la synchronisation du signal auto-pulsant par une harmonique du signal codé généré.

La modulation du laser auto-pulsant par un signal ayant une fréquence porteuse correspondant à une sous-harmonique (f_{SP}/n) de la fréquence d'auto-pulsation du laser permet de supprimer le bruit de phase du signal auto-pulsé (f_{SP}) en créant un parfait verrouillage de phase entre le signal auto-pulsé et le signal modulant.

Un tel émetteur trouve en particulier des applications dans une unité d'émission radiofréquence sur support optique.

## Description

La présente invention concerne le domaine des émetteurs optiques, en particulier des émetteurs optiques dits micro-ondes, ou hyperfréquences, destinés à des applications radio.

L'invention s'applique aux systèmes radio hybrides qui utilisent des émetteurs optiques hyperfréquences pour moduler en amplitude une onde porteuse optique émise de façon à coder un signal à transmettre sous la forme d'une modulation d'une porteuse hyperfréquence (parfois appelée sous-porteuse ou porteuse radioélectrique ou radiofréquence). Cette sous-porteuse modulée en fonction du signal constitue elle-même un signal modulant de l'onde porteuse optique. Le signal optique hyperfréquence ainsi obtenu est couplé dans une fibre de transmission. En réception, une photodiode convertit ce signal optique modulé en signal électrique radiofréquence et le transmet à une antenne radio.

La transmission d'un signal radio par fibre optique permet d'assurer une transmission à large bande passante depuis une unité centrale d'émission vers des unités d'antenne distantes. Deux types de systèmes radio connus offrent un accès large bande. Le système dit de distribution micro-onde local (LMDS, pour « Local Microwave Distribution System » en anglais) émettant à environ 40 GHz avec un débit de l'ordre de 25 Mbit/s; et le système dit mobile large bande (MBS, pour « Mobile Broadband System » en anglais) émettant à environ 60 GHz avec un débit de l'ordre de 155 Mbit/s.

La transmission d'un signal à 40 ou 60 GHz entre une unité d'émission et des antennes peut se faire par fibre optique, telle qu'une fibre optique monomode classique du type SMF (Single Mode Fiber en anglais).

L'émetteur optique d'une telle unité centrale d'émission doit générer un signal optique hyperfréquence vers les antennes. A cet effet, les informations par exemple binaires correspondant à des '0' et des '1' doivent être codées sur le signal hyperfréquence. La photodiode de réception de l'antenne doit convertir le signal optique radio transmis par la fibre en un signal électrique.

Plusieurs techniques ont été proposées dans l'art antérieur pour générer et coder un signal optique hyperfréquence à émettre dans une fibre de transmission.

Une solution réalisée dans les systèmes radio hybrides existants consiste à utiliser un laser monomode à émission continue associé à un modulateur à électro-absorption, ou tout autre type de modulateur tel qu'un modulateur Mach-Zehnder en niobate de lithium (LiNbO₃). Le modulateur est disposé en aval du laser et permet de moduler le signal optique à une fréquence du domaine des hyperfréquences. Les informations binaires à transmettre sont codées sur la porteuse hyperfréquence. Cette solution est cependant onéreuse, car les composants adaptés aux hautes fréquences, par exemple à 40 ou 60 GHz, sont encore coûteux.

Une autre solution consiste à utiliser le battement de deux lasers émettant chacun à une longueur d'onde donnée. Une photodiode est alors apte à générer un signal micro-onde de fréquence correspondant à la différence des deux longueurs d'onde émises. Avec une telle solution, il n'est pas nécessaire d'utiliser des modulateurs à haute fréquence, puisqu'un signal optique micro-onde est généré avec une fréquence correspondant à la différence des longueurs d'onde émises par les deux lasers.

Une telle solution est en particulier décrite dans la publication « Packaged Semiconductor Laser Optical Phase-Locked Loop (OPLL) for Photonic Generation, Processing and Transmission of Microwaves Signals », de L. N. Langley, et al. IEEE Transactions on Microwave Theory and Techniques, Vol. 47, No 7, juillet 1999. Les signaux optiques d'un laser maître et d'un laser esclave sont couplés dans une fibre optique et envoyés à une photodiode, qui détecte ces signaux. Dans cette publication, il est en outre proposé de faire une boucle de verrouillage de phase en agissant sur le laser esclave pour réduire le bruit de phase généré du signal micro-onde du fait que les deux lasers ne sont pas parfaitement en phase l'un avec l'autre.

La publication « Low-Phase-Noise Millimeter-Wave Generation at 64 GHz and Data Transmission Using Optical Sideband Injection Locking » de R. P. Braun et al. IEEE Photonics Technology Letters, Vol. 10, No 5, mai 1998, propose également de générer un signal micro-onde à partir du battement de deux lasers. Un laser maître est modulé avec une sous-harmonique de la fréquence radio à émettre. Des bandes latérales de modulation sont alors générées. Un laser de référence et un laser esclave sont alors verrouillés chacun sur une de ces bandes latérales de modulation. Le signal micro-onde est généré à partir des longueurs d'onde émises par les lasers de référence et esclave. Le bruit de phase du signal micro-onde généré est bien réduit puisque le laser de référence et le laser esclave sont en phase par la synchronisation à deux bandes latérales de modulation du laser maître. Le laser esclave est par ailleurs modulé pour le codage du signal à transmettre aux antennes.

Ces solutions nécessitent cependant d'utiliser plusieurs lasers, ce qui implique un surcoût.

Une autre solution consiste à utiliser un laser auto pulsant pour émettre un signal micro-onde dont la fréquence est celle d'auto-pulsation du laser.

Les lasers dits « auto pulsants », ou « self pulsating lasers » en anglais, émettent une puissance optique qui varie dans le temps même si les courants injectés dans la structure du laser sont constants. Un type de laser auto-pulsant est un laser multimode longitudinal à semi-conducteurs. Ainsi, deux modes ou plus sont simultanément émis à au moins deux longueurs d'onde distinctes. La fréquence d'auto-pulsation du laser est égale à la différence entre les fréquences de deux modes.

Différentes structures peuvent être envisagées pour réaliser des lasers auto pulsants du type multimode longitudinal. Parmi ces structures, on peut citer les dispositifs lasers DFB (pour « Distributed Feed Back » en anglais) auto-pulsants, comprenant deux sections actives couplées à une section de contrôle de phase. Chaque section active de ce type de dispositif laser comporte un réseau de Bragg. Les deux réseaux de Bragg de ce type de dispositif ont des périodes différentes, de sorte que le laser oscille simultanément sur deux longueurs d'onde. On peut se référer à la publication « Modeling of mode control and noise in self pulsating Phase Comb Lasers », de H.J. Wunsche, et al ; IEEE Selected Topics in Quantum Electronics, Vol 9, Issue 3, May-June 2003, pages 857-864.

Il existe également des dispositifs laser DBR (pour « Distributed Bragg Reflector ») auto-pulsants, comprenant une première section active définissant un guide d'onde actif et une deuxième section définissant un guide d'onde passif à réflecteur de Bragg distribué. Un choix de longueur appropriée de la section Bragg permet d'obtenir un effet laser sur plusieurs modes. Le battement de modes dans ce type de laser va permettre la synchronisation de phase des différents modes à cause d'effets non-linéaires. On peut se référer à la publication « Analysis of self-pulsation in distributed Bragg reflector laser based on four-wave mixing » de P. Landais, J. Renaudier, P. Gallion and G-H. Duan, Photonics West, 2004.

La publication « Optical Millimeter-wave Generation and Wireless Data Transmission Using a Dual Mode Laser » de G. Grosskopf et al. IEEE Photonics Technology Letters, Vol. 12, No 12, décembre 2000, propose de coder un signal optique émis par un laser auto-pulsant en aval de son émission. Un modulateur de type Mach-Zehnder applique un codage approprié aux signaux auto-pulsés émis. Cette solution nécessite cependant un composant supplémentaire de modulation. Le bruit de phase du signal micro-onde généré est bien réduit par le fait que le signal est synchronisé par rapport à un signal électrique modulant, comme cela est décrit dans la publication « Optical microwave source » de S. Bauer et al. Electronics Letters, Vol. 38, No 7. , 28 mars 2002.

Pour réduire le nombre de composants utilisés, une solution peut consister alors à moduler directement le laser auto-pulsant. A cet effet, on applique un signal de modulation sur l'une ou l'autre des sections actives, ou de Bragg afin de modifier l'indice de réfraction de cette section et ainsi faire varier la fréquence d'auto-pulsation.

Une telle solution est décrite dans la publication « Self Pulsating Laser Diodes as Fast-Tunable FSK Transmitters in Subcarrier Multiple Access Networks », de J.B. Georges et K.Y. Lau, IEEE Photonics Technology Letters, Vol 5, No 2, Février 1993. Un laser auto-pulsant est modulé par un signal électrique correspondant directement aux informations binaires à transmettre. En effet, les informations binaires correspondant à des '0' sont représentées par une tension électrique spécifique U₀ et les informations binaires correspondant à des '1' sont représentées par une tension électrique spécifique U₁. Ainsi, lorsque la tension de commande appliquée au laser auto-pulsant est U₀, le laser émet ses modes avec une certaine fréquence d'auto-pulsation, et lorsque la tension de commande appliquée au laser est U₁, le laser auto-pulsant émet ses modes avec une autre fréquence d'auto-pulsation.

Cependant, le signal d'auto-pulsation présente généralement un bruit de phase important qui peut induire des erreurs en réception.

La présente invention propose de résoudre les inconvénients de l'art antérieur et propose de réaliser un émetteur optique comprenant un laser auto-pulsant qui est modulé de manière à ce que les différents modes émis soient verrouillés en phase. Le bruit de phase transmis avec le signal micro-onde est donc considérablement réduit et la qualité du signal améliorée. Simultanément les informations binaires à transmettre sont codées sur la fréquence du signal modulant le laser auto-pulsant.
A cet effet, l'invention propose un émetteur optique micro-ondes comprenant :
- un laser auto-pulsant apte à produire un signal auto-pulsé ayant une fréquence d'auto-pulsation donnée ;
- un dispositif de modulation apte à générer un signal codé par modulation de fréquence ou de phase autour d'une fréquence correspondant à une sous-harmonique de la fréquence d'auto-pulsation du laser auto-pulsant;
le dispositif de modulation étant disposé pour influencer un paramètre physique dudit laser auto-pulsant en réponse audit signal codé généré, ladite influence étant appliquée avec une puissance suffisante pour permettre la synchronisation du signal auto-pulsé avec une harmonique du signal codé généré.

En pratique, un paramètre physique facile à influencer est typiquement l'indice et/ou le gain d'un guide optique constitutif du laser auto-pulsant.

Selon un mode de réalisation, le dispositif de modulation est un circuit de modulation électrique.

Selon une caractéristique, le circuit de modulation électrique comporte un oscillateur de fréquence variable piloté par un signal électrique d'encodage.

Selon une caractéristique, le signal codé généré par le circuit de modulation électrique est un courant de commande appliqué au laser auto-pulsant.

Selon un autre mode de réalisation, le dispositif de modulation est un circuit de modulation électro-optique fournissant ledit signal codé généré sous la forme d'un signal optique et disposé pour injecter ce signal optique dans un guide optique constitutif du laser auto-pulsant.

Selon une caractéristique, le circuit de modulation électro-optique comporte un laser maître monomode modulable par un circuit électronique.

Selon une caractéristique, le laser maître émet un signal optique monomode modulé autour d'une sous-harmonique de la fréquence d'auto-pulsation du laser auto-pulsant.

Selon une caractéristique, le circuit de modulation électro-optique comporte un circuit électronique comprenant un oscillateur de fréquence variable piloté par un signal électrique d'encodage et fournissant un courant de commande au laser maître.

Ainsi, le signal codé généré par le circuit de modulation électro-optique est un signal optique modulé en amplitude au rythme d'une fréquence qui varie autour d'une sous-harmonique de la fréquence d'auto-pulsation, ce signal optique étant couplé dans le laser auto-pulsant.

Selon un mode de réalisation, le laser auto-pulsant est un laser à réflecteur de Bragg.

Selon un mode de réalisation, le laser auto-pulsant est un laser à contre réaction distribuée.

L'invention s'applique à une unité d'émission radiofréquence comportant un émetteur optique selon l'invention et couplé à une fibre de transmission.

Les particularités et avantages de l'invention apparaîtront plus clairement à la lecture de la description qui suit, donnée à titre d'exemple illustratif et non limitatif, et faite en référence aux figures annexées qui représentent :
- la figure 1, un schéma de principe d'un système radio hybride comprenant un émetteur selon un premier mode de réalisation de l'invention ;
- la figure 2, un schéma de principe d'un système radio hybride comprenant un émetteur selon un deuxième mode de réalisation de l'invention.

L'émetteur optique selon l'invention comprend un laser auto-pulsant émettant un signal micro-onde à la fréquence d'auto-pulsation (f_{SP}) du laser et un circuit de modulation apte à générer un signal codé en modulation de fréquence (FSK) autour d'une fréquence correspondant à une sous-harmonique (f_{SP}/n, n = 1, 2, 3, ...) de la fréquence d'auto-pulsation du laser. Le circuit de modulation est disposé pour influencer un paramètre physique dudit laser auto-pulsant en réponse au signal codé généré de façon à permettre la synchronisation du signal auto-pulsé avec une harmonique du signal codé généré.

La modulation du laser auto-pulsant par un signal à une fréquence correspondant à une sous-harmonique (f_{SP}/n) de la fréquence d'auto-pulsation du laser permet de supprimer le bruit de phase du signal auto-pulsant (f_{SP}) en créant par le battement de modes un parfait verrouillage de phase entre les modes émis par le laser auto-pulsant. De plus, le codage par modulation de fréquence a lieu dans le circuit de modulation.

Un tel émetteur trouve en particulier des applications dans une unité d'émission radiofréquence sur support optique.

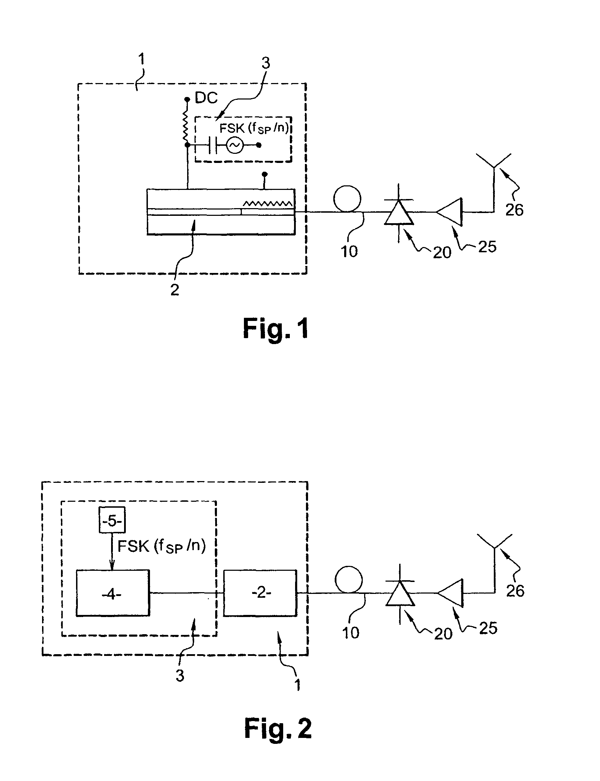

L'émetteur selon l'invention va être décrit plus en détail selon un premier mode de réalisation illustré schématiquement sur la figure 1.

Un tel émetteur 1 comprend un laser auto-pulsant 2 émettant de manière connue en soi une onde présentant un spectre multimode. Le laser 2 illustré sur la figure 1 est un laser de type DBR précédemment décrit, mais tout autre type de laser auto-pulsant connu pourrait également être envisagé, tel qu'un laser DFB ou à peigne de phase.

Le laser 2 est dimensionné pour émettre des modes distincts à des fréquences données séparées par la fréquence d'auto-pulsation du laser f_{SP}. Cette fréquence d'auto-pulsation f_{SP} dépend du laser mais également du courant injecté dans le laser. Un signal optique micro-onde à cette fréquence d'auto-pulsation f_{SP} va alors être générée et pourra être transformé en pur signal micro-onde par une photodiode, tel que cela a été décrit précédemment.

Le laser 2 est polarisé avec un courant direct DC injecté sur la section active du laser à travers une résistance de polarisation. Tout autre circuit pour créer une polarisation peut être envisagé selon le type de laser utilisé.

L'émetteur selon l'invention comporte aussi un circuit de modulation 3. Ce circuit 3 est adapté pour générer une sous-porteuse ayant une fréquence proche d'une sous-harmonique f_{SP}/n de la fréquence d'auto-pulsation f_{SP} du laser. La sous-porteuse est en outre modulée en fréquence en fonction d'un signal d'information à transmettre selon le format FSK (Frequency Shift Keying) connu en soi.

Le circuit de modulation 3 reçoit donc en entrée un signal électrique de base, ou d'encodage, correspondant aux informations binaires à transmettre, et fournit en sortie un signal codé par modulation de fréquence autour de la sous-harmonique f_{SP}/n. Le circuit de modulation 3 peut comporter un oscillateur de fréquence variable piloté par le signal électrique binaire d'entrée. Ainsi, par exemple, les données de l'état '0' sont codées par le circuit de modulation à la fréquence f_{SP}/n et les données de l'état '1' sont codées à la fréquence (f_{SP}+ Δf_{SP})/n.

Selon le mode de réalisation illustré sur la figure 1, le circuit de modulation 3 est un circuit purement électrique. Le signal électrique d'encodage peut être un courant ou une tension variable selon la donnée '0' ou '1' à coder. Le circuit de modulation fournit en sortie par exemple un courant alternatif ayant la fréquence f_{SP}/n ou (f_{SP} + Δf_{SP})/n respectivement représentatives de la donnée '0' ou '1' de l'information à transmettre.

Le courant fournit par le circuit de modulation 3 est injecté dans le laser 2 et constitue un courant de commande de ce laser. Le laser auto-pulsant n'est donc pas commandé par un courant de modulation qui représente en bande de base le signal binaire à coder, mais par un courant modulé en fréquence autour d'une sous-harmonique de la fréquence d'auto-pulsation du laser.

L'application d'un tel courant de commande va moduler l'indice et/ou le gain du guide optique du laser auto-pulsant, ce qui va générer de part et d'autre des fréquences optiques correspondant aux différents mode du laser auto-pulsant et espacées de f_{SP} des bandes de modulation latérales distantes de ces fréquences d'un multiple entier de f_{SP}/n, c'est-à-dire d'harmoniques de f_{SP}/n. Les modes créés par le laser auto-pulsant vont alors se synchroniser par rapport à ces bandes latérales. Les modes émis par le laser 2 seront donc bien verrouillés en phase et le bruit de phase transmis avec le signal micro-onde sera considérablement réduit.

Par exemple, si la fréquence d'auto-pulsation du laser est de 40GHz, une sous-harmonique de codage peut être 10 GHz. La modulation FSK de cette sous-harmonique peut être effectuée avec un débit de 144 Mbit/s et avec un taux de modulation de 0.1. La fréquence du signal électrique appliqué au laser sera donc soit de 10 GHz, soit de 10+0.1x0.144 GHz selon l'état binaire du signal à transmettre.

Le circuit de modulation 3 fournit donc au laser 2 un signal de commande dans la bande d'accrochage de la fréquence d'auto-pulsation. Ainsi, une des harmoniques de modulation sera suffisamment proche de la fréquence d'auto-pulsation et, si la puissance de ce signal de commande est ajustée à un niveau suffisant, l'accrochage du signal auto-pulsé au signal modulant sera assuré. Selon l'exemple précédent, les fréquences d'auto-pulsation du signal codé seront verrouillées d'une part à 4x10 GHz et d'autre part à 4x(10+0.1x0.144) GHz.

Ainsi, la fréquence d'auto-pulsation du signal commute entre deux valeurs selon l'état binaire des données à transmettre, mais cette variation alterne entre des modes verrouillés en phase. Le bruit de phase lié à la non synchronisation des modes émis peut donc être éliminé dans un émetteur selon l'invention.

Le laser 2 émet alors le signal ainsi codé en fréquence dans une fibre optique de transmission 10 et une photodiode 20 détecte ce signal optique, lequel est transmis après amplification 25 sous la forme d'un signal électrique micro-onde à une antenne 26.

Selon un autre mode de réalisation, illustré sur la figure 2, le dispositif de modulation 3 est un circuit électro-optique. Tous les éléments identiques ou équivalents au mode de réalisation de la figure 1 portent les mêmes numéros de référence.

Selon ce deuxième mode de réalisation, le circuit de modulation 3 comporte un circuit électronique 5 et un laser maître monomode 4 modulable à haute fréquence. Le laser maître 4 émet un signal optique couplé dans le laser auto-pulsant 2, c'est-à-dire que ce signal optique est injecté dans le guide optique du laser auto-pulsant 2 de façon à influencer l'indice et/ou le gain de ce guide optique.

Le laser maître 4 est modulable par un circuit électronique 5 fournissant un signal électrique modulé autour d'une sous-harmonique (f_{SP}/n) de la fréquence d'auto-pulsation. Le circuit électronique 5 fournit un signal de commande à appliquer au laser maître 4. Ce circuit électronique 5 est prévu pour générer un signal modulé en fréquence selon un format FSK (Frequency Shift Keying) et autour d'une sous-harmonique f_{SP}/n de la fréquence d'auto-pulsation du laser.

Le circuit électronique 5 de modulation reçoit ainsi en entrée un signal électrique en bande de base correspondant aux informations binaires à transmettre, et fournit en sortie un signal électrique modulé en fréquence en fonction de ces informations. Ce circuit électronique 5 peut être du même type que le circuit de modulation 3 décrit en référence au premier mode de réalisation.

Le signal électrique fournit par le circuit 5 peut ainsi être un courant alternatif dont la fréquence f_{SP}/n et (f_{SP}+ Δf_{SP})/n est respectivement représentative de l'état '0' ou '1' de l'information à transmettre. Le courant fournit par le circuit électrique 5 est un courant de commande du laser maître 4.

Le laser maître 4 va alors émettre un signal optique monomode modulé, soit à une fréquence f_{SP}/n, soit à une fréquence (f_{SP}+ Δf_{SP})/n. Si la puissance de ce signal optique est ajustée à un niveau suffisant, le laser auto-pulsant 2 va alors se synchroniser à la fréquence de modulation du laser maître 4. Cette fréquence de modulation étant égale à ou proche d'une sous-harmonique de la fréquence d'auto-pulsation f_{SP} du laser 2, des bandes latérales de modulation du laser auto-pulsant seront suffisamment proches des modes auto-pulsés pour que ces derniers soient verrouillés par les bandes de modulation. Les différents modes émis par le laser auto-pulsant seront donc bien verrouillés en phase.

Ce deuxième mode de réalisation diffère du premier en ce que le laser auto-pulsant est modulé en fréquence par une commande optique au lieu d'une commande électrique. Le deuxième mode de réalisation est plus coûteux à mettre en oeuvre du fait de l'utilisation d'un composant supplémentaire (le laser maître). Ce mode de réalisation peut cependant être utilisé lorsque le laser auto-pulsant ne peut pas être directement modulé par une commande en courant à une sous-harmonique de la fréquence d'auto-pulsation. En effet, la bande passante de modulation d'un laser est limitée d'une part intrinsèquement par la fréquence des oscillations de relaxation et d'autre part extrinsèquement par la structure et le montage. Ainsi, si le laser auto-pulsant ne peut pas être modulé par la sous-harmonique de la fréquence d'auto-pulsation souhaitée, l'utilisation d'un laser maître, qui est modulable à cette sous-harmonique, devient nécessaire.

Bien que la description précédente mentionne le cas où le signal codé résulte d'une modulation de fréquence (FSK) autour d'une fréquence correspondant à une sous-harmonique de la fréquence d'auto-pulsation du laser auto-pulsant, l'invention peut s'appliquer si le signal est codé par modulation de phase autour de cette même sous-harmonique.

## Revendications

1. Emetteur optique micro-ondes (1) comprenant :
- un laser auto-pulsant (2) apte à produire un signal auto-pulsé ayant une fréquence d'auto-pulsation (f_{SP}) donnée ;
- un dispositif de modulation (3) apte à générer un signal codé par modulation de fréquence (FSK) ou de phase autour d'une fréquence correspondant à une sous-harmonique (f_{SP}/n, n entier >1) de la fréquence d'auto-pulsation du laser auto-pulsant (2);
le dispositif de modulation (3) étant disposé pour influencer un paramètre physique dudit laser auto-pulsant (2) en réponse audit signal codé généré, ladite influence étant appliquée avec une puissance suffisante pour permettre la synchronisation du signal auto-pulsé avec une harmonique du signal codé généré.

2. Emetteur optique selon la revendication 1, **caractérisé en ce que** ledit paramètre physique est l'indice et/ou le gain d'un guide optique constitutif du laser auto-pulsant (2).

3. Emetteur optique selon la revendication 1 ou 2, **caractérisé en ce que** le dispositif de modulation est un circuit de modulation électrique.

4. Emetteur optique selon la revendication 3, **caractérisé en ce que** le circuit de modulation électrique comporte un oscillateur de fréquence variable piloté par un signal électrique d'encodage.

5. Emetteur optique selon la revendication 3 ou 4, **caractérisé en ce que** le signal codé généré par le circuit de modulation électrique est un courant de commande appliqué au laser auto-pulsant.

6. Emetteur optique selon la revendication 1 ou 2, **caractérisé en ce que** le dispositif de modulation est un circuit de modulation électro-optique fournissant ledit signal codé généré sous la forme d'un signal optique et disposé pour injecter ce signal optique dans un guide optique constitutif du laser auto-pulsant (2).

7. Emetteur optique selon la revendication 6, **caractérisé en ce que** le circuit de modulation électro-optique comporte un laser maître monomode (4) modulable par un circuit électronique (5).

8. Emetteur optique selon la revendication 7, **caractérisé en ce que** le laser maître (4) émet un signal optique monomode modulé autour d'une sous-harmonique (f_{SP} /n) de la fréquence d'auto-pulsation du laser auto-pulsant (2).

9. Emetteur optique selon l'une des revendications 6 à 8, **caractérisé en ce que** le circuit de modulation électro-optique comporte un circuit électronique (5) comprenant un oscillateur de fréquence variable piloté par un signal électrique d'encodage et fournissant un courant de commande au laser maître (4).

10. Emetteur optique selon l'une des revendications 1 à 9, **caractérisé en ce que** le laser auto-pulsant est un laser à réflecteur de Bragg (DBR).

11. Emetteur optique selon l'une des revendications 1 à 9, **caractérisé en ce que** le laser auto-pulsant est un laser à contre réaction distribuée (DFB).

12. Unité d'émission radiofréquence comportant un émetteur optique selon l'une des revendications 1 à 11, couplé à une fibre de transmission (10).
